# EUROPÄISCHE PATENTSCHRIFT

(11) **EP 3 969 747 B1**
(45) Veröffentlichungstag und Bekanntmachung des Hinweises auf die Patenterteilung: **08.07.2026**
(21) Anmeldenummer: 20724086.2
(22) Anmeldetag: 05.05.2020
(51) Int. Cl.: F03D 17/00

(54) **VERFAHREN UND VORRICHTUNG ZUR BESTIMMUNG EINER ROTORAUSRICHTUNG EINES ROTORS EINER WINDENERGIEANLAGE**
METHOD AND DEVICE FOR DETERMINING A ROTOR ORIENTATION OF A ROTOR OF A WIND TURBINE
PROCÉDÉ ET DISPOSITIF DE DÉTERMINATION D'UNE ORIENTATION DE ROTOR D'UN ROTOR DANS UNE ÉOLIENNE

(30) Priorität: 16.05.2019 DE 102019112976
(43) Veröffentlichungstag der Anmeldung: 23.03.2022
(73) Patentinhaber: Wobben Properties GmbH, 26607 Aurich (DE)
(72) Erfinder: HAUSCHILD, Luciano, 26603 Aurich (DE)
(74) Vertreter: Eisenführ Speiser
(86) Internationale Anmeldenummer: PCT/EP2020/062441
(87) Internationale Veröffentlichungsnummer: WO 2020/229226

(56) Entgegenhaltungen:
- EP-A1- 2 263 126
- EP-A2- 2 175 130
- EP-A2- 2 202 407
- WO-A1-2018/177615
- US-A1- 2010 194 603

## Beschreibung

Die Erfindung betrifft ein Verfahren zur Bestimmung einer Rotorausrichtung eines Rotors mit einem Rotorblatt einer Windenergieanlage, ein Verfahren zur Bestimmung einer geografischen Position eines Rotors mit einem Rotorblatt einer Windenergieanlage, eine Windenergieanlage und einen Windpark.

Windenergieanlagen sind grundsätzlich bekannt, sie erzeugen elektrische Leistung aus Wind. Für die Leistungsvermessung von Windenergieanlagen und die Auswertung der Windnachführung unter Berücksichtigung einer von einem meteorologischen Mast vermessenen Windrichtung, ist die Kenntnis der Ausrichtung eines Rotors erforderlich. Diese Ausrichtung betrifft insbesondere die Ausrichtung des Rotors nach den Himmelsrichtungen. Insbesondere ist es erforderlich, dass eine exakte Nordausrichtung festgestellt wird, sodass die Leistung der Windenergieanlage in vordefinierten Himmelsrichtungsabschnitten bekannt ist.

Windenergieanlagen werden darüber hinaus häufig in abgegrenzten örtlichen Bereichen installiert und bilden gemeinsam einen Windpark. Ein Windpark umfasst in der Regel eine Vielzahl von Windenergieanlagen. Die Windenergieanlagen eines Windparks können sich bei bestimmten Himmelsrichtungen gegenseitig abschirmen. In diesem Fall können sogenannte Nachlaufverluste entstehen. Um eine Abschirmung einer Windenergieanlage durch eine weitere Windenergieanlage systemtechnisch zu erfassen, ist eine Kenntnis der exakten Ausrichtung der Windenergieanlagen erforderlich.

### Geänderte Beschreibungsseiten (Reinschrift)

Zur Bestimmung der Ausrichtung einer Windenergieanlage wird diese bei der Inbetriebnahme in der Regel aus vorbestimmter Entfernung über eine Kompasspeilung angepeilt und daraus die Ausrichtung abgeleitet. Die Anpeilung erfolgt oftmals auf den Spinner oder auf die Rotornabe.

Die DE 102015 122 126 A1 beschreibt ein Verfahren zum Bestimmen eines Azimutwinkels einer Windenergieanlage, indem der Azimutwinkel mittels in der Gondel angeordneter GNSS-Empfänger bestimmt wird. Ferner wird ein GNSS-Kompass beschrieben, der innerhalb der Gondel angeordnet ist. Die EP 2 333 316 A2 beschreibt den Einsatz von GPS-Sensoren an einer Windenergieanlage, um eine Kabelverdrehung im Turm zu vermeiden. Die WO 2018 177 615 A1 betrifft ein Verfahren, eine Windenergieanlage und eine Vorrichtung zur Bestimmung einer Orientierung einer Rotorebene einer Windenergieanlage.

Das Deutsche Patent- und Markenamt hat in der Prioritätsanmeldung zur vorliegenden Anmeldung folgenden Stand der Technik recherchiert: EP 2 333 316 A2, DE 10 2015 122 126 A1, EP 2 457 818 B1, DE 10 2013 014 622 A1.

Es ist daher eine Aufgabe der vorliegenden Erfindung, ein Verfahren zur Bestimmung einer Rotorausrichtung eines Rotors mit einem Rotorblatt einer Windenergieanlage, ein Verfahren zur Bestimmung einer geografischen Position eines Rotors mit einem Rotorblatt einer Windenergieanlage, eine Windenergieanlage und einen Windpark bereitzustellen, welche eine verbesserte Ausrichtungsgenauigkeit einer Windenergieanlage ermöglicht. Insbesondere ist es eine Aufgabe der Erfindung, eine Lösung bereitzustellen, die eine exaktere Nordausrichtung eines Rotors einer Windenergieanlage bei geringen Kosten ermöglicht.

Gemäß einem ersten nicht beanspruchten Aspekt wird die Aufgabe gelöst durch ein Verfahren zur Bestimmung einer Rotorausrichtung eines Rotors mit einem Rotorblatt einer Windenergieanlage, umfassend die Schritte Empfangen von mindestens zwei Positionsdaten eines in dem Rotorblatt angeordneten GNSS-Empfängers, wobei die zwei Positionsdaten zwei verschiedene horizontale Positionen des GNSS-Empfängers repräsentieren, und Ermitteln der Rotorausrichtung des Rotors auf Basis der Positionsdaten.

Unter einer Rotorausrichtung ist insbesondere die Orientierung des Rotors nach den Himmelsrichtungen zu verstehen. Die vier Haupthimmelsrichtungen, auch Kardinalpunkte genannt, sind Norden, Osten, Süden und Westen. Zur genaueren Orientierung sind die Himmelsrichtungen vielfach feiner unterteilt. Insbesondere werden diese auch in Grad angegeben, wobei Norden 0 Grad, Osten 90 Grad, Süden 180 Grad und Westen 270 Grad entspricht. Exakte Ausrichtungen können ferner zwischen diesen Haupthimmelsrichtungen angegeben werden, beispielsweise 3 Grad. Die Rotorausrichtung kann beispielsweise der Flächenorthogonalen entsprechen, die ein drehender Rotor überstreicht.

Es werden mindestens zwei Positionsdaten des in dem Rotorblatt angeordneten GNSS-Empfängers empfangen. Die Abkürzung GNSS steht für Global Navigation Satellite System oder auch globales Navigationssatellitensystem und ist ein Sammelbegriff für die Verwendung bestehender und künftiger globaler Satellitensysteme wie GPS (Global Positioning System), GLONASS (Global Navigation Satellite System), Galileo oder BEIDOU sowie verschiedene (satellitengestützte) Ergänzungs- oder Zusatzsysteme. Ergänzungs- oder Zusatzsysteme verbessern die Positionsgenauigkeit, beispielsweise DGPS (Differential Global Positioning System), RTK GPS (Real Time Kinematics Global Positioning System) oder SBAS (Satellite Based Augmentation Systems). Von dem Begriff GNSS umfasst verstanden werden auch regionale Navigationssatellitensysteme (Regional Navigation Satellite Systems, RNSS). Insbesondere mittels Systemen wie DGPS oder RTK GPS kann die relative Position zwischen zwei Empfängern mittlerweile auf wenige Zentimeter genau bestimmt werden.

Unter einem GNSS-Empfänger ist insbesondere eine Einheit zu verstehen, die aus Satellitensignalen eines GNSS, also eines globalen Navigationssatellitensystems, die eigene Position bestimmen kann. Bei dem im Vorherigen beschriebenen GNSS-Empfänger kann es ausreichend sein, dass dieser lediglich die Position in horizontaler Richtung bestimmen kann. Der GNSS-Empfänger kann insbesondere vier oder mehr Satellitensignale empfangen. Vorzugsweise ist der GNSS-Empfänger eingerichtet, um die empfangenen Satellitensignale, insbesondere vier oder mehr Satellitensignale, auszuwerten und um eine Position, insbesondere eine horizontale Position, zu bestimmen. Darüber hinaus kann es bevorzugt sein, dass der GNSS-Empfänger zur Weitergabe der die Position repräsentierenden Positionsdaten eingerichtet ist. Der GNSS-Empfänger ist vorzugsweise beabstandet von einer Drehachse des Rotors angeordnet.

Die zwei Positionsdaten repräsentieren zwei verschiedene horizontale Positionen des GNSS-Empfängers. Unter einer horizontalen Position wird insbesondere eine Position im Raum unter Vernachlässigung der vertikalen Komponente verstanden. In einem kartesischen Koordinatensystem mit einer horizontalen X,Y-Ausrichtung und einer vertikalen Z-Ausrichtung ist die horizontale Position beispielsweise durch eine X,Y-Koordinate definiert.

Bei der Drehung eines Rotorblatts, vorzugsweise um eine Rotorachse, führt der in dem Rotorblatt angeordnete GNSS-Empfänger eine Kreisbewegung aus. Wenn die vertikale Komponente vernachlässigt wird, bewegt sich der GNSS-Empfänger in der X,Y-Ebene hin und her. Diese Hin- und Herbewegung wird auf einer geraden Linie mit zwei Umkehrpunkten ausgeführt, wenn der Rotor hinsichtlich seiner vertikalen Drehachse stillsteht, der Azimutantrieb also nicht aktiv ist. Bei zwei verschiedenen horizontalen Positionen kann somit eine Richtung zwischen einer ersten horizontalen Position und einer zweiten horizontalen Position definiert werden. Insbesondere kann diese Richtung in kartesischen X,Y-Koordinaten, beispielsweise mittels eines Vektors, definiert werden. Diese Richtung der Beabstandung der zwei verschiedenen horizontalen Positionen des GNSS-Empfängers kann zur Ermittlung der Rotorausrichtung genutzt werden.

Der Erfindung liegt die Erkenntnis zugrunde, dass GNSS-Empfänger häufig keine exakten Positionsdaten liefern. Aufgrund dessen kann eine exakte Positionierung durch einen oder zwei GNSS-Empfänger in der Gondel nicht gewährleistet werden. Dies liegt einerseits an der grundsätzlichen Unschärfe von gebräuchlichen GNSS und andererseits an der Abschirmung durch das Gondelgehäuse. Systeme mit einer höheren Genauigkeit sind an Standorten von Windenergieanlagen teilweise nicht verfügbar. Darüber hinaus können Systeme mit höherer Genauigkeit zu höheren Kosten führen.

Aufgrund dieser Ungenauigkeit wurden in der Vergangenheit unter anderem GNSS-Kompasse verwendet, um eine exakte Position feststellen zu können, wobei diese für eine flächendeckende Anwendung zu teuer sind.

Der Erfindung lag nun ferner die Erkenntnis zugrunde, dass zwar die ermittelten Positionen von den tatsächlichen Positionen abweichen können, jedoch die Verbindungslinie zwischen zwei ermittelten Positionen stets parallel zu einer Verbindungslinie der tatsächlichen Positionen ausgerichtet ist. Diese Erkenntnis macht sich das im Vorherigen beschriebene Verfahren zunutze, indem die zumindest parallel zur tatsächlichen Verbindungslinie ausgerichtete Verbindungslinie zwischen den zwei verschiedenen ermittelten horizontalen Positionen quer zur tatsächlichen Rotorausrichtung liegt.

In einer vorteilhaften Fortbildung des Verfahrens zur Bestimmung der Rotorausrichtung ist vorgesehen, dass dieses den Schritt umfasst: Bestimmen einer horizontalen Bewegungslinie des GNSS-Empfängers durch Auswertung der mindestens zwei Positionsdaten.

Die horizontale Bewegungslinie ist insbesondere als die Verbindungslinie der zwei verschiedenen horizontalen Positionen des GNSS-Empfängers zu verstehen, unter Vernachlässigung von vertikalen Positionsdaten. Die Verbindungslinie der zwei verschiedenen horizontalen Positionen kann somit auch eine vertikale Komponente beinhalten, jedoch wird diese vertikale Komponente bei der Bestimmung der horizontalen Bewegungslinie vernachlässigt. Die horizontale Bewegungslinie ist in der Regel rechtwinklig zur Rotorausrichtung des Rotors ausgerichtet.

In einer weiteren bevorzugten Ausführungsvariante des Verfahrens zur Bestimmung einer Rotorausrichtung umfasst dieses vorzugsweise den Schritt: Konvertieren der horizontalen Bewegungslinie um 90 Bogengrad zur Ermittlung der Rotorausrichtung. Da die horizontale Bewegungslinie in der Regel rechtwinklig zur Rotorausrichtung des Rotors ausgerichtet ist, kann durch die Konvertierung dieser horizontalen Bewegungslinie um 90 Bogengrad eine Rotorausrichtung ermittelt werden.

Gemäß einer weiteren bevorzugten Ausführungsvariante des Verfahrens zur Bestimmung einer Rotorausrichtung ist vorgesehen, dass dieses den Schritt umfasst: Empfangen einer Vielzahl von Positionsdaten des GNSS-Empfängers, die verschiedene horizontale Positionen des GNSS-Empfängers repräsentieren, mit einer Frequenz von größer 0,1 Hz, größer 0,5 Hz, größer 1 Hz und/oder größer 2 Hz.

Durch das Empfangen einer Vielzahl von Positionsdaten des GNSS-Empfängers, die eine Vielzahl von horizontalen Positionen des GNSS-Empfängers repräsentieren, kann ein genaues Bewegungsprofil des GNSS-Empfängers in horizontaler Richtung auf seiner Kreisbahn ermittelt werden. Auf Basis dieser exakten Kreisbahn können ferner die Bewegungslinien, insbesondere die horizontalen Bewegungslinien des GNSS-Empfängers, ermittelt werden. Auf Basis dieser genauen horizontalen Bewegungslinien kann dann die Rotorausrichtung exakt ermittelt werden.

Insbesondere kann durch den Empfang einer Vielzahl von Positionsdaten innerhalb von kurzer Zeit, beispielsweise mit einer Frequenz zwischen 1 Hz und 2 Hz, die Bewegung des Rotors um eine vertikale Achse, beispielsweise mittels eines Azimutantriebs, vernachlässigt werden. Die Azimutverstellung eines Rotors erfolgt in der Regel mit einer geringen Geschwindigkeit, sodass bei einer üblichen Rotordrehzahl und einer hochfrequenten Positionsdatensammlung annähernd horizontale Bewegungslinien ermittelt werden können. Die Bewegungsgeschwindigkeit um die vertikale Achse ist im Vergleich zur rotatorischen Bewegungsgeschwindigkeit des Rotors um seine im Wesentlichen horizontale Rotationsachse gering. Durch die Sammlung von sehr vielen Daten des GNSS-Empfängers kann somit unabhängig von einer Bewegung um eine vertikale Achse eine genaue Ermittlung der Rotorausrichtung erfolgen.

Gemäß einer weiteren bevorzugten Fortbildung des Verfahrens ist vorgesehen, dass dieses den Schritt umfasst: Überwachen der Rotorausrichtung während des Betriebs des Rotors. Neben der im Vorherigen beschriebenen Anwendung einer exakten Rotorausrichtung beispielsweise bei der Inbetriebnahme, kann durch diesen Schritt die Rotorausrichtung kontinuierlich während des Betriebs des Rotors überwacht werden. Beispielsweise kann dadurch eine Ausrichtung, die durch einen Azimutsensor ermittelt wird, verifiziert werden. Darüber hinaus kann dieses Signal an eine zentrale Steuereinheit der Windenergieanlage weitergeleitet werden und dort verarbeitet werden. Beispielsweise kann dieser Wert auch zur Bestimmung von Nachlaufeffekten für andere Windenergieanlagen berücksichtigt werden.

Gemäß einer weiteren bevorzugten Fortbildung des Verfahrens zur Bestimmung der Rotorausrichtung ist vorgesehen, dass dieses den Schritt umfasst: Ausrichten des Rotors auf eine vordefinierte Rotorausrichtung auf Basis der ermittelten Rotorausrichtung. Die vordefinierte Rotorausrichtung kann beispielsweise auf Basis eines Windmessgerätes bestimmt werden. Die Rotorausrichtung eines Rotors einer Windenergieanlage ist vorzugsweise parallel zu einer Windrichtung. Insbesondere bei einem Luv-Läufer ist vorgesehen, dass die Rotorausrichtung der Windrichtung entgegengerichtet ist. Durch die Ermittlung der Rotorausrichtung mittels zweier Positionsdaten von zwei verschiedenen horizontalen Positionen des GNSS-Empfängers kann eine exakte Ausrichtung des Rotors in Richtung der Windrichtung gegenüber einer von einem meteorologischen Mast vermessenen Windrichtung verifiziert werden. Hiermit kann die Windnachführung optimiert und die Leistung gesteigert werden, insbesondere solange die Windenergieanlage im Teillastbereich betrieben wird.

Gemäß einer weiteren bevorzugten Ausführungsvariante des Verfahrens ist vorgesehen, dass dieses den Schritt umfasst: Abgleichen der ermittelten Rotorausrichtung mit einem Ausrichtungswert eines Azimutsensors und/oder mit der vordefinierten Rotorausrichtung.

Durch diesen Abgleich kann eine Abweichung der tatsächlichen Rotorausrichtung von einem gemessenen Wert, beispielsweise dem Ausrichtungswert des Azimutsensors, ermittelt werden. Diese Abweichung kann anschließend die Basis eines Korrekturwertes sein, um eine vordefinierte Rotorausrichtung tatsächlich zu erreichen.

Gemäß einem weiteren Aspekt wird die eingangs genannte Aufgabe gelöst durch ein Verfahren zur Bestimmung einer geografischen Position eines Rotors mit einem Rotorblatt einer Windenergieanlage, umfassend die Schritte: Empfangen von mindestens zwei ersten Positionsdaten eines in dem Rotorblatt angeordneten GNSS-Empfängers, wobei die zwei ersten Positionsdaten zwei verschiedene horizontale Positionen des GNSS-Empfängers repräsentieren, und Ermitteln einer ersten Rotorausrichtung auf Basis der ersten Positionsdaten; Empfangen von mindestens zwei zweiten Positionsdaten des GNSS-Empfängers und Ermitteln einer von der ersten verschiedenen, zweiten Rotorausrichtung auf Basis der zweiten Positionsdaten; und Ermitteln der geografischen Position des Rotors auf Basis der ersten Rotorausrichtung und der zweiten Rotorausrichtung.

Der Erfindung liegt ferner die Erkenntnis zugrunde, dass auf Basis der Ermittlung einer ersten Rotorausrichtung und einer zweiten Rotorausrichtung eine präzise Ermittlung der geografischen Position des Rotors ermöglicht wird. Beispielsweise kann dies durch die Bestimmung eines Schnittpunkts der zwei Rotorausrichtungen erfolgen. Das Ermitteln einer ersten Rotorausrichtung und einer von der ersten Rotorausrichtung verschiedenen zweiten Rotorausrichtung erfordert in der Regel das Drehen des Rotors um seine im Wesentlichen vertikale Achse.

Das Verfahren zur Bestimmung einer geografischen Position des Rotors wird in vorteilhafter Weise fortgebildet durch den Schritt: Bestimmen eines Schnittpunkts der ersten Rotorausrichtung und der zweiten Rotorausrichtung und Ermittlung einer geografischen Position des Schnittpunkts auf Basis der Positionsdaten.

Der Schnittpunkt der zwei Rotorausrichtungen kann beispielsweise die geografische Position des Rotors charakterisieren. Darüber hinaus kann der Schnittpunkt auch Basis einer Berechnung der geografischen Position des Rotors sein, beispielsweise bei einer entsprechend gewünschten Lage der geografischen Position relativ zu der horizontalen Erstreckung der Windenergieanlage. Beispielsweise kann die geografische Position des Rotors ein Spinner des Rotors sein oder alternativ eine vertikale Drehachse der Windenergieanlage.

Gemäß einem weiteren Aspekt wird die eingangs genannte Aufgabe gelöst durch ein Verfahren zur Steuerung eines Windparks, umfassend die Schritte: Bestimmen einer Rotorausrichtung eines Rotors mit einem Rotorblatt einer ersten Windenergieanlage gemäß mindestens einer der im Vorherigen beschriebenen Ausführungsvarianten des Verfahrens, und/oder Bestimmen einer geografischen Position eines Rotors mit einem Rotorblatt einer bzw. der ersten Windenergieanlage gemäß mindestens einer der im Vorherigen beschriebenen Ausführungsvarianten des Verfahrens; Übermitteln der Rotorausrichtung und/oder der geografischen Position an eine Windparksteuerung; und Steuern des Windparks unter Berücksichtigung der Rotorausrichtung und/oder der geografischen Position. Die Steuerung eines Windparks kann durch die Kenntnis der exakten Ausrichtungen der Windenergieanlage in vorteilhafter Weise beeinflusst werden.

Beispielsweise kann dieses den Schritt umfassen: Abregeln einer ersten Windenergieanlage und/oder einer zweiten Windenergieanlage, wenn die Rotorausrichtung der ersten Windenergieanlage und/oder der zweiten Windenergieanlage in einem vordefinierten Richtungsbereich liegt.

Die zweite Windenergieanlage kann sich beispielsweise in Lee von der ersten Windenergieanlage befinden. Die zweite Windenergieanlage wird somit durch Nachlaufeffekte der ersten Windenergieanlage beeinflusst. Es kann in diesem Fall bevorzugt sein, dass die erste Windenergieanlage anders gesteuert wird. Es kann auch bevorzugt sein, dass in diesem Fall die erste Windenergieanlage abgeschaltet wird.

Ferner ist es bevorzugt, dass das Verfahren den Schritt der Überprüfung der Windnachführung während einer Leistungsvermessung umfasst. Darüber hinaus ist es bevorzugt, dass das Verfahren für eine Windpark-Leistungsoptimierung eingesetzt wird.

Außerdem kann das Verfahren zur Verbesserung der Datenqualität eingesetzt werden. Dies kann beispielsweise eine Leistungsvorhersage sein, die für den Energiehandel am Spotmarkt genutzt wird. Darüber hinaus kann das Verfahren für eine Windparkplanung eingesetzt werden. Üblicherweise werden für die Planung eines neuen Windparks die Daten von bestehenden Windparks in einem definierten Umkreis, beispielsweise 20 km, zur Energieprognose eingesetzt.

Gemäß einer weiteren bevorzugten Ausführungsvariante des Verfahrens zur Steuerung des Windparks ist vorgesehen, dass dieses den Schritt umfasst: Erfassen des vom GNSS-Empfängers der ersten Windenergieanlage und Erfassen des vom GNSS-Empfängers einer bzw. der zweiten Windenergieanlage empfangenen Zeitsignals, und Synchronisieren von Befeuerungslichtern der ersten und zweiten Windenergieanlage unter Berücksichtigung der erfassten Zeitsignale. Die Signale von Navigationssatellitensystemen enthalten in der Regel eine Zeitkomponente, welche im Vorherigen als Zeitsignal bezeichnet ist.

Gemäß einem weiteren Aspekt wird die eingangs genannte Aufgabe gelöst durch eine Windenergieanlage, umfassend einen Rotor mit einem Rotorblatt, das beabstandet von einer Drehachse des Rotors einen GNSS-Empfänger aufweist, und eine Steuerungseinheit, wobei der GNSS-Empfänger signaltechnisch mit der Steuerungseinheit gekoppelt ist, wobei die Steuerungseinheit eingerichtet ist, zum Empfang von Positionsdaten des GNSS-Empfängers, wobei die Positionsdaten mindestens zwei verschiedene horizontale Positionen des GNSS-Empfängers repräsentieren und zum Ermitteln der Rotorausrichtung des Rotors auf Basis der Positionsdaten.

Die Steuerungseinheit kann vorzugsweise eingerichtet sein, eine horizontale Bewegungslinie des GNSS-Empfängers durch Auswertung der mindestens zwei Positionsdaten zu bestimmen. Darüber hinaus kann die Steuerungseinheit eingerichtet sein, die horizontale Bewegungslinie um 90 Bogengrad zu konvertieren, um die Rotorausrichtung zu ermitteln. Des Weiteren ist es bevorzugt, dass eine Vielzahl von Positionsdaten des GNSS-Empfängers empfangen werden, wobei diese Positionsdaten verschiedene horizontale Positionen des GNSS-Empfängers repräsentieren. Beispielsweise kann diese Vielzahl von Positionsdaten mit einer Frequenz von größer 0,1 Hz, größer 0,5 Hz, größer 1 Hz und/oder größer 2 Hz empfangen werden.

Es ist darüber hinaus bevorzugt, dass die Steuerungseinheit eingerichtet ist, die Rotorausrichtung während des Betriebs des Rotors zu überwachen. Ferner kann es bevorzugt sein, dass die Steuerungseinheit eingerichtet ist, die ermittelte Rotorausrichtung mit einem Ausrichtungswert eines Azimutsensors und/oder mit einer vordefinierten Rotorausrichtung abzugleichen.

Es ist ferner bevorzugt, dass die Steuerungseinheit eingerichtet ist, mindestens zwei erste Positionsdaten des GNSS-Empfängers zu empfangen, und eine erste Rotorausrichtung auf Basis der ersten Positionsdaten zu ermitteln, und mindestens zwei zweite Positionsdaten des GNSS-Empfängers zu empfangen, und eine zweite Rotorausrichtung auf Basis der zweiten Positionsdaten zu ermitteln, und eine geografische Position des Rotors auf Basis der ersten Rotorausrichtung und der zweiten Rotorausrichtung zu ermitteln.

Die Steuerungseinheit kann innerhalb der Windenergieanlage, beispielsweise innerhalb der Gondel, angeordnet sein. Darüber hinaus kann die Steuerungseinheit auch an einem von der Windenergieanlage entfernten Ort angeordnet sein. Dies kann beispielsweise eine Windpark-Steuerungsanlage sein. Es ist bevorzugt, dass der GNSS-Empfänger mehr als 3 Meter, vorzugsweise mehr als 5 Meter von der Drehachse des Rotors beabstandet ist.

Gemäß einem weiteren Aspekt wird die eingangs genannte Aufgabe gelöst durch einen Windpark, umfassend eine erste Windenergieanlage und eine zweite Windenergieanlage gemäß dem vorherigen Anspruch, eine Windparksteuerungseinheit, die eingerichtet ist, eine erste Rotorausrichtung der ersten Windenergieanlage und eine zweite Rotorausrichtung der zweiten Windenergieanlage zu empfangen, und die erste Windenergieanlage und die zweite Windenergieanlage auf Basis der ersten Rotorausrichtung und/oder der zweiten Rotorausrichtung zu steuern.

Die Windenergieanlage und der Windpark sowie ihre möglichen Fortbildungen weisen Merkmale auf, die sie insbesondere dafür geeignet machen, für ein Verfahren zur Bestimmung einer Rotorausrichtung sowie für ein Verfahren zur Bestimmung einer geografischen Position eines Rotors wie im Vorherigen erläutert verwendet zu werden. Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Verfahrens zur Bestimmung einer Rotorausrichtung eines Rotors mit einem Rotorblatt einer Windenergieanlage verwiesen.

Bevorzugte Ausführungsbeispiele werden exemplarisch anhand der beiliegenden Figuren erläutert. Es zeigen:
- Figur 1:: eine schematische Darstellung einer Windenergieanlage;
- Figur 2:: eine schematische Darstellung eines Windparks;
- Figur 3:: eine schematische, zweidimensionale Ansicht eines Rotors einer Windenergieanlage;
- Figur 4:: eine schematische, zweidimensionale Draufsicht auf die Windenergieanlage aus Figur 3;
- Figur 5:: eine weitere schematische, zweidimensionale Draufsicht der Windenergieanlage aus Figur 3;
- Figur 6:: ein schematisches Verfahren zur Bestimmung einer Rotorausrichtung eines Rotors mit einem Rotorblatt einer Windenergieanlage;
- Figur 7:: ein weiteres Verfahren zur Bestimmung einer Rotorausrichtung eines Rotors mit einem Rotorblatt einer Windenergieanlage;
- Figur 8:: ein Verfahren zur Bestimmung einer geografischen Position eines Rotors mit einem Rotorblatt einer Windenergieanlage; und
- Figur 9:: ein schematisches Verfahren zur Steuerung eines Windparks.

In den Figuren sind gleiche oder im Wesentlichen funktionsgleiche bzw. -ähnliche Elemente mit den gleichen Bezugszeichen bezeichnet.

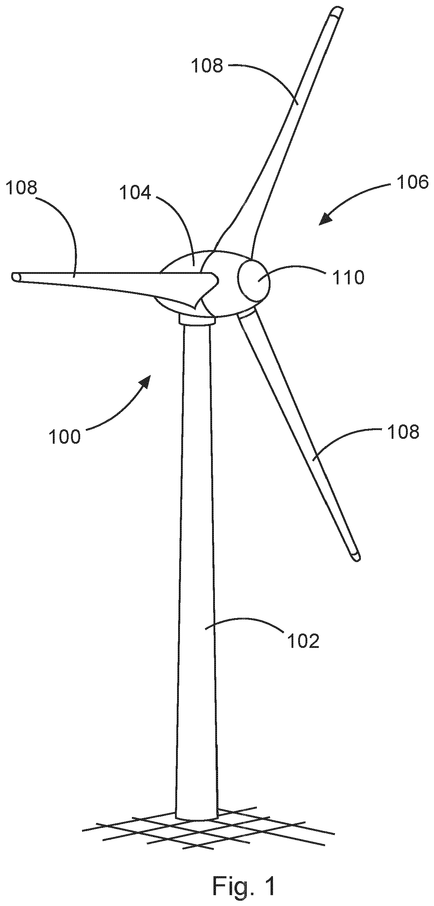

Figur 1 zeigt eine schematische Darstellung einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt, wobei diese Drehbewegung um eine Rotorachse erfolgt. Durch diese Drehbewegung dreht sich auch ein elektrodynamischer Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Beabstandet von der Drehachse des Rotors 106 ist zumindest in einem der Rotorblätter 108 ein GNSS-Empfänger angeordnet. Der GNSS-Empfänger kann beispielsweise als ein GPS-Empfänger ausgebildet sein. Durch die Rotation des Rotors 106 um die Rotorachse bewegt sich der von der Rotorachse beabstandete GNSS-Empfänger auf einer Kreisbahn. Die Windenergieanlage 100 weist darüber hinaus eine Steuerungseinheit auf, die eingerichtet ist zum Empfang von Positionsdaten des GNSS-Empfängers, wobei die Positionsdaten mindestens zwei verschiedene horizontale Positionen des GNSS-Empfängers repräsentieren und zum Ermitteln der Rotorausrichtung des Rotors auf Basis der Positionsdaten ausgebildet ist. Der GNSS-Empfänger kann beispielsweise 3 Meter, vorzugsweise mehr als 5 Meter, von der Drehachse des Rotors 106 beabstandet sein.

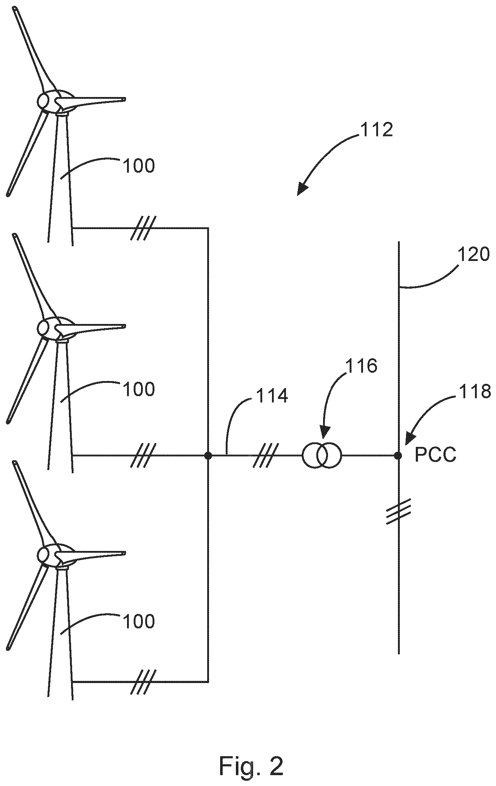

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, insbesondere den erzeugten Strom, über ein elektrisches Parknetz 114 bereit. Die jeweils erzeugten Ströme bzw. Leistungen der einzelnen Windenergieanlagen 100 werden in der Regel aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Figur 2 ist eine vereinfachte Darstellung eines Windparks 112, die beispielsweise keine Windparksteuerungseinheit zeigt, obwohl natürlich eine Windparksteuerungseinheit vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Die Windparksteuerungseinheit ist insbesondere eingerichtet, eine erste Rotorausrichtung einer der Windenergieanlagen 100 und eine zweite Rotorausrichtung einer anderen Windenergieanlage 100 zu empfangen und die erste Windenergieanlage 100 und die zweite Windenergieanlage 100 auf Basis der ersten Rotorausrichtung und/oder der zweiten Rotorausrichtung zu steuern.

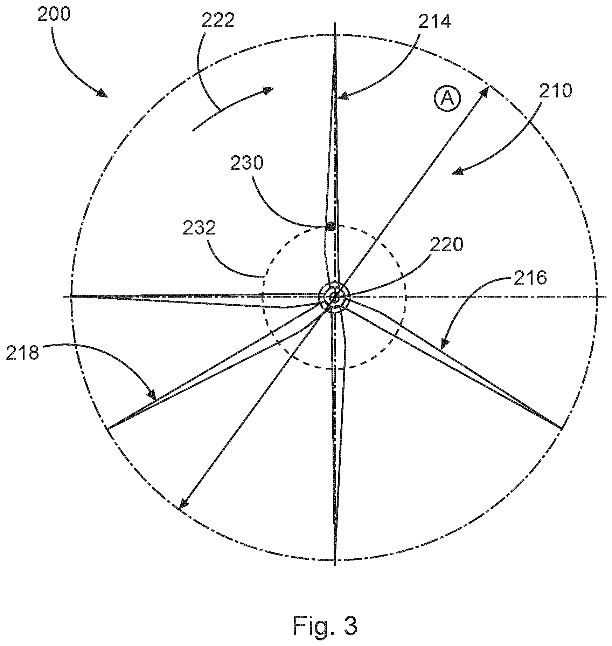

Figur 3 zeigt eine schematische, zweidimensionale Ansicht eines Rotors einer Windenergieanlage 200. Die Windenergieanlage 200 umfasst einen Rotor 210, der um eine Rotorachse 220 drehbar an der Gondel 212 angeordnet ist. Der Rotor 210 weist ein erstes Rotorblatt 214, ein zweites Rotorblatt 216 und ein drittes Rotorblatt 218 auf. Der Rotor 210 wird um die Rotorachse 220 durch den Wind in eine Drehrichtung 222 bewegt. Durch die Bewegung des Rotors 210 um die Rotorachse 220 führt der von der Rotorachse 220 beabstandet angeordnete GNSS-Empfänger 230 eine kreisförmige Bewegung auf einer Bewegungsbahn 232 aus.

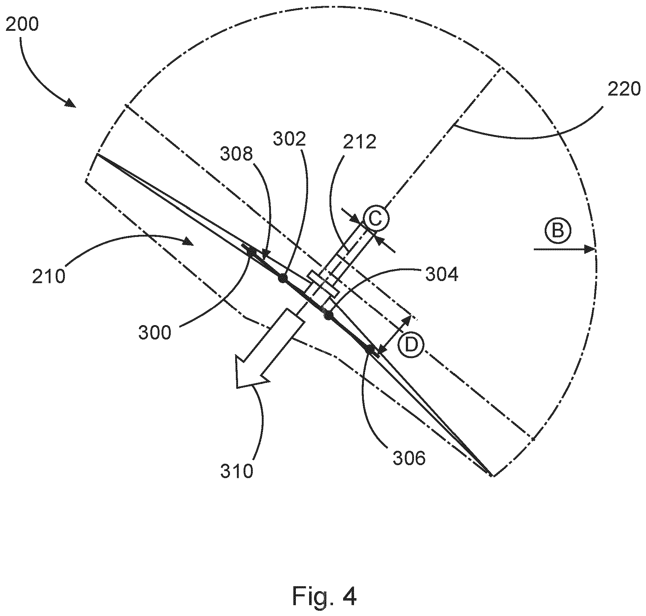

Bei Vernachlässigung der vertikalen Koordinate der Bewegungsbahn 232 führt der GNSS-Empfänger 230 die in Figur 4 gezeigte horizontale Bewegung auf der horizontalen Bewegungslinie 308 aus. Beispielsweise kann der GNSS-Empfänger 230 eine erste horizontale Position 300, eine zweite horizontale Position 302, eine dritte horizontale Position 304 und eine vierte horizontale Position 306 an eine Steuerungseinheit senden oder diese Positionen zur Verfügung stellen. Die Zurverfügungstellung dieser Positionen 300, 302, 304, 306 erfolgt in Form von Positionsdaten. Auf Basis dieser Positionsdaten kann eine Steuerungseinheit die horizontale Bewegungslinie 308 ermitteln. Durch Konvertierung der horizontalen Bewegungslinie 308 um 90 Bogengrad kann die Rotorausrichtung 310 ermittelt werden.

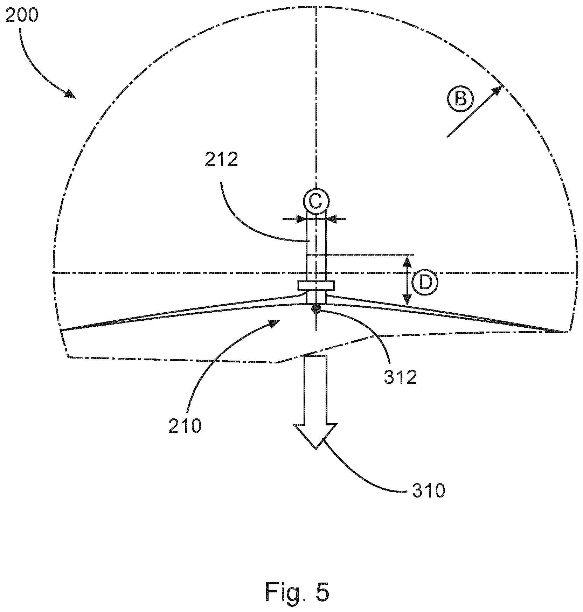

Durch langfristige Ermittlung von horizontalen Bewegungslinien 308, insbesondere bei unterschiedlichen Rotorausrichtungen 310, kann wie in Figur 5 schematisch gezeigt ein Mittelwert 312 ermittelt werden. Der Mittelwert 312 stellt eine geografische Position des Rotors 210 dar.

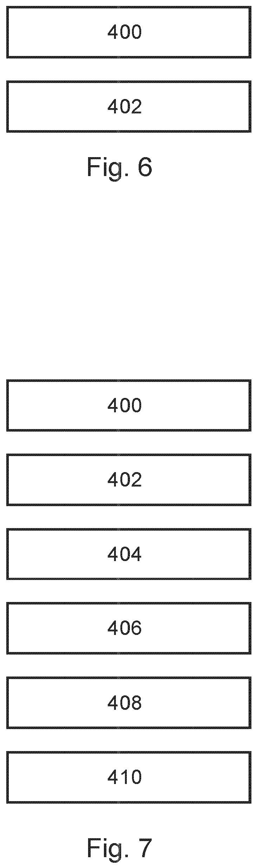

Figur 6 zeigt ein schematisches Verfahren zur Bestimmung einer Rotorausrichtung 310 eines Rotors 106, 210 mit einem Rotorblatt 108, 218 einer Windenergieanlage 100, 200. In Schritt 400 werden mindestens zwei Positionsdaten eines in dem Rotorblatt 108, 218 angeordneten GNSS-Empfängers 230 empfangen, wobei die zwei Positionsdaten zwei verschiedene horizontale Positionen 300, 302, 304, 306 des GNSS-Empfängers 230 repräsentieren. Auf Basis dieser Positionsdaten wird die Rotorausrichtung 310 in Schritt 402 ermittelt.

Figur 7 zeigt ein weiteres Verfahren zur Bestimmung einer Rotorausrichtung 310 eines Rotors 106, 210 mit einem Rotorblatt 108, 218 einer Windenergieanlage 100, 200. Das Verfahren zur Bestimmung der Rotorausrichtung 310 des Rotors 106, 210 mit einem Rotorblatt 108, 218 einer Windenergieanlage 100 wird hier um weitere Schritte ergänzt.

In Schritt 404 wird eine horizontale Bewegungslinie 308 des GNSS-Empfängers 230 durch Auswertung der mindestens zwei Positionsdaten bestimmt. In Schritt 406 wird diese horizontale Bewegungslinie um 90 Bogengrad konvertiert, um eine Ermittlung der Rotorausrichtung 310 vorzunehmen.

In Schritt 406 wird die Rotorausrichtung 310 während des Betriebs des Rotors 106, 210 überwacht. In Schritt 408 wird der Rotor auf eine vordefinierte Rotorausrichtung auf Basis der ermittelten Rotorausrichtung 310 ausgerichtet. In Schritt 410 wird die ermittelte Rotorausrichtung 310 mit einem Ausrichtungswert eines Azimutsensors und/oder mit einer vordefinierten Rotorausrichtung abgeglichen.

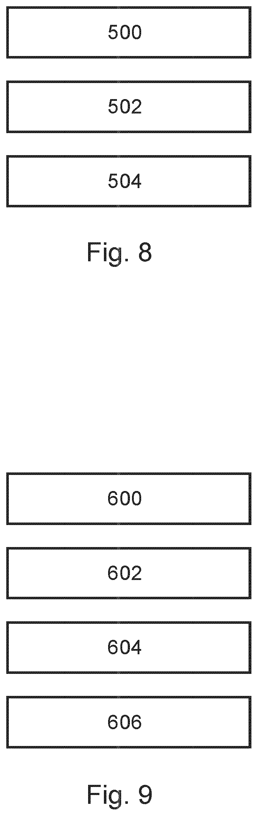

Figur 8 zeigt ein Verfahren zur Bestimmung einer geografischen Position eines Rotors 106, 210 mit einem Rotorblatt 108, 218 einer Windenergieanlage 100, 200. In Schritt 500 werden mindestens zwei erste Positionsdaten des in dem Rotorblatt 108, 218 angeordneten GNSS-Empfängers 230 empfangen, wobei die zwei ersten Positionsdaten zwei verschiedene horizontale Positionen des GNSS-Empfängers 230 repräsentieren. Auf Basis dieser ersten Positionsdaten wird eine erste Rotorausrichtung ermittelt.

In Schritt 502 wird dieser Schritt für eine zweite Rotorausrichtung wiederholt, wobei sich der Rotor 106, 210 vorzugsweise um eine vertikale Achse gedreht hat.

In Schritt 504 wird die geografische Position des Rotors 106, 210 auf Basis der ersten Rotorausrichtung und der zweiten Rotorausrichtung ermittelt.

Figur 9 zeigt ein schematisches Verfahren zur Steuerung eines Windparks 112. In Schritt 600 wird eine Rotorausrichtung 310 eines Rotors 106, 210 mit einem Rotorblatt 108, 218, einer ersten Windenergieanlage 100 gemäß einer der im Vorherigen beschriebenen Ausführungsvarianten bestimmt. In Schritt 602 wird ergänzend oder alternativ zu Schritt 600 eine geografische Position des Rotors 106, 210 mit einem Rotorblatt 108, 218 einer bzw. der ersten Windenergieanlage 100 gemäß einer der im Vorherigen beschriebenen Ausführungsvarianten bestimmt.

In Schritt 604 wird die Rotorausrichtung und/oder die geografische Position an eine Windparksteuerungseinheit übermittelt. In Schritt 606 wird auf Basis der Rotorausrichtung und/oder der geografischen Position der Windpark 112 gesteuert.

### BEZUGSZEICHEN

- 100: Windenergieanlage
- 102: Turm
- 104: Gondel
- 106: Rotor
- 108: Rotorblätter
- 110: Spinner
- 112: Windpark
- 114: elektrisches Parknetz
- 116: Transformator
- 118: Einspeisepunkt
- 120: Versorgungsnetz
- 200: Windenergieanlage
- 210: Rotor
- 212: Gondel
- 214: erstes Rotorblatt
- 216: zweites Rotorblatt
- 218: drittes Rotorblatt
- 220: Rotorachse
- 222: Drehrichtung
- 230: GNSS-Empfänger
- 232: Bewegungsbahn
- 300: erste horizontale Position
- 302: zweite horizontale Position
- 304: dritte horizontale Position
- 306: vierte horizontale Position
- 308: Horizontale Bewegungslinie
- 310: Rotorausrichtung
- 312: Mittelwert

## Patentansprüche

1. Verfahren zur Bestimmung einer geografischen Position eines Rotors mit einem Rotorblatt einer Windenergieanlage, umfassend die Schritte
- Empfangen von mindestens zwei ersten Positionsdaten eines in dem Rotorblatt angeordneten GNSS-Empfängers, wobei die zwei ersten Positionsdaten zwei verschiedene horizontale Positionen des GNSS-Empfängers repräsentieren, und Ermitteln einer ersten Rotorausrichtung auf Basis der ersten Positionsdaten;
- Empfangen von mindestens zwei zweiten Positionsdaten des GNSS-Empfängers und Ermitteln einer von der ersten verschiedenen, zweiten Rotorausrichtung auf Basis der zweiten Positionsdaten; und
- Ermitteln der geografischen Position des Rotors auf Basis der ersten Rotorausrichtung und der zweiten Rotorausrichtung.

2. Verfahren gemäß dem vorherigen Anspruch, umfassend den Schritt
- Bestimmen eines Schnittpunkts der ersten Rotorausrichtung und der zweiten Rotorausrichtung und Ermittlung einer geografischen Position des Schnittpunkts auf Basis der Positionsdaten.

3. Verfahren zur Steuerung eines Windparks, umfassend die Schritte
- Bestimmen einer geografischen Position eines Rotors mit einem Rotorblatt einer bzw. der ersten Windenergieanlage gemäß mindestens einem der Ansprüche 1-2;
- Übermitteln der Rotorausrichtung und/oder der geografischen Position an eine Windparksteuerung; und
- Steuern des Windparks unter Berücksichtigung der Rotorausrichtung und/oder der geografischen Position.

4. Verfahren gemäß dem vorherigen Anspruch, umfassend den Schritt
- Abregeln einer ersten Windenergieanlage und/oder einer zweiten Windenergieanlage, wenn die Rotorausrichtung der ersten Windenergieanlage und/oder der zweiten Windenergieanlage in einem vordefinierten Richtungsbereich liegt.

5. Verfahren gemäß mindestens einem der vorherigen Ansprüche 3-4, umfassend den Schritt
- Erfassen des vom GNSS-Empfängers der ersten Windenergieanlage und Erfassen des vom GNSS-Empfängers einer bzw. der zweiten Windenergieanlage empfangenen Zeitsignals, und
- Synchronisieren von Befeuerungslichtern der ersten und zweiten Windenergieanlage unter Berücksichtigung der erfassten Zeitsignale.

6. Windenergieanlage, umfassend
- einen Rotor mit einem Rotorblatt, das beabstandet von einer Drehachse des Rotors einen GNSS-Empfänger aufweist, und
- eine Steuerungseinheit,
- wobei der GNSS-Empfänger signaltechnisch mit der Steuerungseinheit gekoppelt ist,
- wobei die Steuerungseinheit eingerichtet ist, zum Empfang von Positionsdaten des GNSS-Empfängers, wobei die Positionsdaten mindestens zwei verschiedene horizontale Positionen des GNSS-Empfängers repräsentieren,
- wobei die Steuerungseinheit eingerichtet ist mindestens zwei erste Positionsdaten des GNSS-Empfängers zu empfangen, und eine erste Rotorausrichtung auf Basis der ersten Positionsdaten zu ermitteln, und mindestens zwei zweite Positionsdaten des GNSS-Empfängers zu empfangen, und eine zweite Rotorausrichtung auf Basis der zweiten Positionsdaten zu ermitteln, und eine geografische Position des Rotors auf Basis der ersten Rotorausrichtung und der zweiten Rotorausrichtung zu ermitteln.

7. Windenergieanlage gemäß dem vorherigen Anspruch, wobei
- der GNSS-Empfänger mehr als 3 Meter, vorzugsweise mehr als 5 Meter von der Drehachse des Rotors beabstandet ist.

8. Windpark, umfassend
- eine erste Windenergieanlage und eine zweite Windenergieanlage gemäß dem vorherigen Anspruch,
- eine Windparksteuerungseinheit, die eingerichtet ist, eine erste Rotorausrichtung der ersten Windenergieanlage und eine zweite Rotorausrichtung der zweiten Windenergieanlage zu empfangen, und die erste Windenergieanlage und die zweite Windenergieanlage auf Basis der ersten Rotorausrichtung und/oder der zweiten Rotorausrichtung zu steuern.

## Claims

1. A method for determining a geographical position of a rotor with a rotor blade of a wind turbine, comprising the steps of
- receiving at least two items of first position data from a GNSS receiver arranged in the rotor blade, wherein the two items of first position data represent two different horizontal positions of the GNSS receiver, and determining a first rotor orientation on the basis of the first position data;
- receiving at least two items of second position data from the GNSS receiver and determining a second rotor orientation, which differs from the first rotor orientation, on the basis of the second position data; and
- determining the geographical position of the rotor on the basis of the first rotor orientation and the second rotor orientation.

2. The method as claimed in the preceding claim, comprising the step of
- determining a point of intersection of the first rotor orientation and the second rotor orientation and determining a geographical position of the point of intersection on the basis of the position data.

3. A method for controlling a wind farm, comprising the steps of
- determining a geographical position of a rotor with a rotor blade of a or the first wind turbine as claimed in at least one of claims 1-2;
- transmitting the rotor orientation and/or the geographical position to a wind farm controller; and
- controlling the wind farm taking into account the rotor orientation and/or the geographical position.

4. The method as claimed in the preceding claim, comprising the step of
- curtailing a first wind turbine and/or a second wind turbine if the rotor orientation of the first wind turbine and/or of the second wind turbine is in a predefined direction range.

5. The method as claimed in at least one of the preceding claims 3-4, comprising the step of
- capturing the time signal received from the GNSS receiver of the first wind turbine and capturing the time signal received from the GNSS receiver of a or the second wind turbine, and
- synchronizing navigation lights of the first and second wind turbines taking into account the captured time signals.

6. A wind turbine comprising
- a rotor with a rotor blade having a GNSS receiver at a distance from an axis of rotation of the rotor, and
- a control unit,
- wherein the GNSS receiver is coupled to the control unit using signaling technology,
- wherein the control unit is configured to receive position data from the GNSS receiver, wherein the position data represent at least two different horizontal positions of the GNSS receiver,
- wherein the control unit is configured to receive at least two items of first position data from the GNSS receiver, and to determine a first rotor orientation on the basis of the first position data, and to receive at least two items of second position data from the GNSS receiver, and to determine a second rotor orientation on the basis of the second position data, and to determine a geographical position of the rotor on the basis of the first rotor orientation and the second rotor orientation.

7. The wind turbine as claimed in the preceding claim, wherein
- the GNSS receiver is at a distance of more than 3 meters, preferably more than 5 meters, from the axis of rotation of the rotor.

8. A wind farm comprising
- a first wind turbine and a second wind turbine as claimed in the preceding claim,
- a wind farm control unit which is configured to receive a first rotor orientation of the first wind turbine and a second rotor orientation of the second wind turbine and to control the first wind turbine and the second wind turbine on the basis of the first rotor orientation and/or the second rotor orientation.

## Revendications

1. Procédé de définition d'une position géographique d'un rotor avec une pale de rotor d'une éolienne comprenant les étapes
- de réception d'au moins deux premières données de position d'un récepteur GNSS disposé dans la pale de rotor, dans lequel les deux premières données de position représentent deux positions horizontales différentes du récepteur GNSS, et de détermination d'une première orientation de rotor sur la base des premières données de position ;
- de réception d'au moins deux deuxièmes données de position du récepteur GNSS et de détermination d'une deuxième orientation de rotor différente de la première sur la base des deuxièmes données de position ; et
- de détermination de la position géographique du rotor sur la base de la première orientation de rotor et de la deuxième orientation de rotor.

2. Procédé selon la revendication précédente, comprenant l'étape
- de définition d'un point d'intersection de la première orientation de rotor et de la deuxième orientation de rotor et de détermination d'une position géographique du point d'intersection sur la base des données de position.

3. Procédé de commande d'un parc éolien, comprenant les étapes
- de définition d'une position géographique d'un rotor avec une pale de rotor d'une ou de la première éolienne selon au moins l'une des revendications 1-2 ;
- de transmission de l'orientation de rotor et/ou de la position géographique à une commande de parc éolien ; et
- de commande du parc éolien en tenant compte de l'orientation de rotor et/ou de la position géographique.

4. Procédé selon la revendication précédente, comprenant l'étape
- de régulation d'une première éolienne et/ou d'une deuxième éolienne lorsque l'orientation de rotor de la première éolienne et/ou de la deuxième éolienne se situe dans une plage de direction prédéfinie.

5. Procédé selon au moins l'une quelconque des revendications précédentes 3 et 4, comprenant l'étape
- de détection du signal temporel reçu par le récepteur GNSS de la première éolienne et de détection du signal temporel reçu par le récepteur GNSS d'une ou de la deuxième éolienne, et
- de synchronisation de feux de balisage de la première et de la deuxième éolienne en tenant compte des signaux temporels détectés.

6. Éolienne, comprenant
- un rotor avec une pale de rotor, qui présente un récepteur GNSS de manière espacée d'un axe de rotation du rotor, et
- une unité de commande,
- dans laquelle le récepteur GNSS est couplé par une technique de signalisation à l'unité de commande
- dans laquelle l'unité de commande est mise au point pour recevoir des données de position du récepteur GNSS, dans laquelle les données de position représentent au moins deux positions horizontales différentes du récepteur GNSS,
- dans laquelle l'unité de commande est mise au point pour recevoir au moins deux premières données de position du récepteur GNSS, et pour déterminer une première orientation de rotor sur la base des premières données de position, et pour recevoir au moins deux deuxièmes données de position du récepteur GNSS, et pour déterminer une deuxième orientation de rotor sur la base des deuxièmes données de position, et pour déterminer une position géographique du rotor sur la base de la première orientation de rotor et de la deuxième orientation de rotor.

7. Éolienne selon la revendication précédente, dans laquelle
- le récepteur GNSS est espacé à plus de 3 mètres, de préférence à plus de 5 mètres, de l'axe de rotation du rotor.

8. Parc éolien, comprenant
- une première éolienne et une deuxième éolienne selon la revendication précédente,
- une unité de commande de parc éolien, qui est mise au point pour recevoir une première orientation de rotor de la première éolienne et une deuxième orientation de rotor de la deuxième éolienne, et pour commander la première éolienne et la deuxième éolienne sur la base de la première orientation de rotor et/ou de la deuxième orientation de rotor.
